(19) **Europäisches Patentamt**

**European Patent Office**

**Office européen des brevets**

(11) Publication number : **0 497 445 A1**

(12) # EUROPEAN PATENT APPLICATION

(21) Application number : **92300038.4**

(22) Date of filing : **03.01.92**

(51) Int. Cl.⁵ : **B60R 1/08, G02B 5/10**

(30) Priority : **26.01.91 GB 9101743**

(43) Date of publication of application :
**05.08.92 Bulletin 92/32**

(84) Designated Contracting States :
**DE ES FR GB IT**

(71) Applicant : **BRITAX (GECO) S.A.**
**88 Avenue de Fontainebleau, B.P. 20**
**F-77981 St. Fargeau-Ponthierry Cédex (FR)**

(72) Inventor : **Carbonel, Michel**
**10 rue Edouard Henriot**
**772740 Champs S/Marne (FR)**

(74) Representative : **Hollinghurst, Antony**
**Britax Limited Patent Department**
**Chichester West Sussex PO19 2AQ (GB)**

(54) **Mirror unit with transparent lens shaped element.**

(57)  In order to simulate a curved mirror a mirror unit comprises a plane mirror (10), consisting of a reflective layer on a glass substrate, and a refractive element (16) positioned in front of at least part of the plane mirror (10), so that light incident on the refractive element (16) from the opposite side to the plane mirror (10) passes through refractive element (16) and is reflected by the mirror (10) back through the refractive element (16), characterised in that the refractive element (16) is formed from a mouldable transparent plastics material.

*Fig.1.*

EP 0 497 445 A1

This invention relates to a mirror unit of the type comprising a mirror consisting of a reflective layer on a glass substrate and a refractive element positioned in front of at least part of the plane mirror so that light incident on the refractive element from the opposite side to the mirror passes therethrough and is reflected by the mirror back through the refractive element.

GB-A-1237425 discloses a mirror unit of this type in which the refractive element is also formed of glass and is therefore relatively expensive to produce.

It is known to produce a curved mirror by depositing a reflective layer on either the first surface or the second surface of a glass substrate formed to the required shape. However, such mirrors are substantially more expensive than plane mirrors of the same type, due to the cost of producing the curved glass substrate.

It is also known to produce curved mirrors by moulding a substrate to the required shape and depositing a reflective layer thereon. Such mirrors are relatively cheap to produce but the quality of the reflected image is poorer than that obtained with mirrors on a glass substrate.

One object of the present invention is to provide a curved mirror which produces an image of quality comparable with that obtained from a mirror on a glass substrate without the attendant cost penalty.

Another object of the present invention is to provide a mirror having a zone of greater curvature than other zones of the mirror.

GB-A-21472297 discloses a rear view mirror for a motor car in which the mirror substrate comprises a glass prism, the first surface of which is at about 5° to the second surface. The prism has a reflective coating on its second surface. In normal use, the prism is oriented so that the desired field of view is reflected from the second surface. When, at night, the driver of a motor vehicle is dazzled by the reflection in the mirror of the headlights of a following vehicle, the prism can be tilted so that the desired field of view is reflected from the first surface which does not carry a reflective layer. Consequently, only a small proportion of the incident light is reflected and the user is not dazzled. Glass prisms for mirrors of this type are relatively expensive and it is a further object of the invention to provide a cheaper means of achieving this result.

According to the invention, in a mirror unit of the type described above, the refractive element is formed from a mouldable transparent plastics material.

In one form of the invention, the refractive element is a lens, with the result that the mirror unit simulates a curved mirror. If the lens is convex, a concave mirror is simulated. If the lens is concave, a convex mirror is simulated. A lens of non-uniform curvature can be used to simulate a mirror whose curvature varies over its surface.

In any embodiment of the invention, an electro-chromicelement may be located between the refractive element and the first surface of the plane mirror. It is much easier to make plane electro-chromicelements than curved electro-chromicelements.

Embodiments of the invention will now be described, by way of example, with reference to the accompanying drawings, in which:

Figure 1 to 4 are cross-sectional views of four alternative mirror assemblies in accordance with the invention, each of which simulates a convex mirror;

Figure 5 is a cross-sectional view of a known convex mirror of variable curvature;

Figure 6 is a cross-sectional view of a mirror unit in accordance with the invention simulating the mirror shown in Figure 5;

Figure 7 is a cross-sectional view of a dipping vehicle interior mirror incorporating a mirror unit in accordance with the invention;

Figure 8 is an elevational view of an exterior rear view mirror incorporating a mirror unit in accordance with the invention;

Figure 9 is a cross-sectional view taken on the line 9 - 9 in Figure 8;

Figure 10 is an elevational view, similar to Figure 8 of another exterior rear view mirror incorporating a mirror unit in accordance with the invention;

Figure 11 is a cross-sectional view taken on the line 11 - 11 in Figure 10; and

Figure 12 is a cross-sectional view, similar to Figure 11 of, a modified form of the mirror shown in Figure 10.

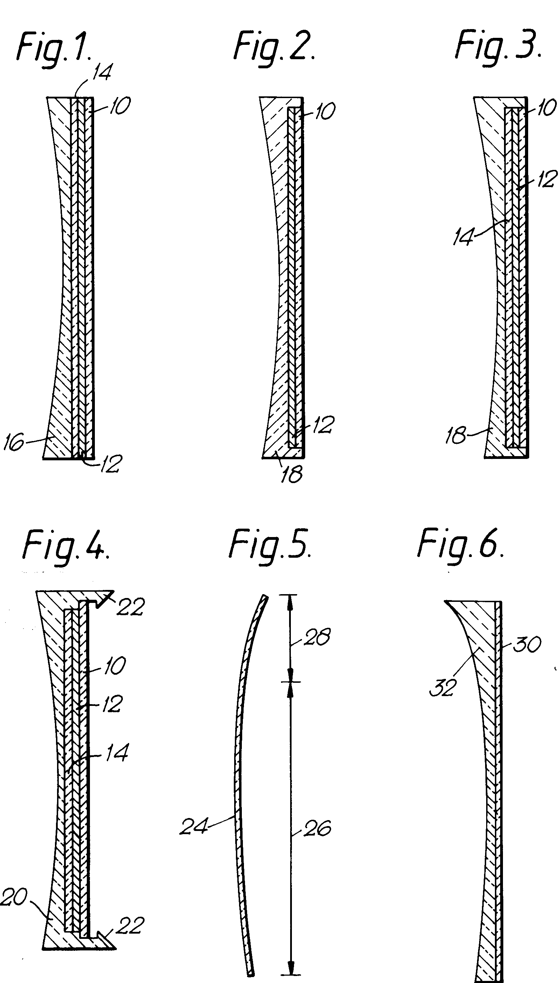

In Figure 1, a plane mirror 10 comprises a reflective layer formed on a glass substrate. An electro-chromicelement 12 (e.g., formed of indium-titanium oxide) is positioned abutting the front of the mirror 10 and is covered by a piece of flat glass 14. A plano-concave lens 16 is positioned abutting the glass layer 14. The lens 16 is moulded from polycarbonate and the curvature of its concave outer surface is determined in accordance with the required curvature of the convex mirror which the assembly is to simulate. The electro-chromicelement 12 provides means whereby application of an electrical signal can be used to vary the reflectivity of the mirror unit, in known manner.

Figure 2 illustrates an alternative mirror unit having a plane mirror 10 and electro-chromicelement 12 similar to the correspondingly numbered components in Figure 1. These two components are received in a recess formed in a polycarbonate lens 18 having a plane surface immediately abutting the electro-chromicelement 12 and having a concave outer surface of the same curvature as that of the lens 16 of Figure 1.

Figure 3 illustrates another embodiment which differs from the embodiment shown in Figure 2 only in that a plane glass layer 14, similar to the correspondingly numbered component of Figure 1, is positioned between the electro-chromicelement 12 and the polycarbonate lens 18.

Figure 4 illustrates yet another embodiment of the invention having a mirror 10, an electro-chromicelement 12 and a plane glass layer 14, similar to the correspondingly numbered components of Figure 3. These three components are received in a recess in a polycarbonate lens 20 which has projecting lugs 22 extending behind the mirror 10 to provide means for securing the mirror unit to a mirror carrier (not shown).

Figure 5 illustrates a known convex mirror of a variable curvature of the type disclosed in US-A-4331382. The mirror 24 has a main viewing zone of relatively low curvature, indicated by the arrow 26, immediately adjacent to the vehicle body. Outside the zone 26 is a zone indicated by the arrow 28 of larger curvature, giving a view over an extended angular range to cover the so-called "blind spot" in which an overtaking vehicle can be concealed after it has left the zone covered by normal vehicle rear view mirrors and before it can be perceived directly by the driver of the vehicle being overtaken.

Figure 6 illustrates a mirror unit in accordance with the invention which simulates the mirror shown in Figure 5. This mirror unit consists of a plane reflective layer on a glass substrate 30 and a concave lens 32, the outer concave surface of which has a varying curvature.

Any of the mirror assemblies illustrated in Figures 1 to 4 may have variable curvature as illustrated in Figure 6.

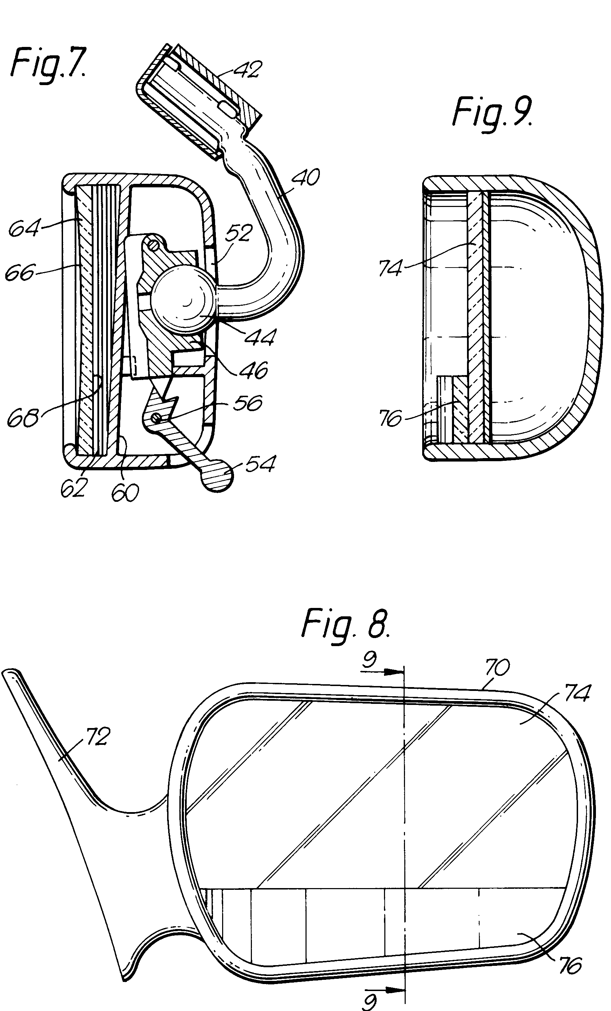

Turning to Figure 7, a dipping interior mirror for a motor car has a mounting stem 40 with a base 42 on one end, suitable for attachment to a vehicle windscreen, and a spherical formation 44 on the other end. A bracket 48 has a part-spherical concave formation which engages with the spherical formation 44 on the stem 40. The bracket 46 is pivotally mounted within a mirror case 48 by means of a pivot pin 50, the stem 40 projecting through an opening 52 in the back of the mirror case. A lever 54 is mounted on a second pivot pin 56 within the case 48 and projects through a second opening 58 at the bottom rear edge thereof. The inner end of the lever 54 engages with the bracket 46 so as to permit the mirror case 48 to be pivoted relative to the stem 40 between two alternative positions. This is a conventional arrangement for dipping interior mirrors and its operation will not be described further.

The case 48 contains an integral mirror carrier 60 on which is mounted a glass prism 62 having its broad edge along the top of the case, as viewed in Figure 7 and having a reflective layer on the surface abutting the mirror carrier 60. A plastics lens 64 is positioned in front of the prism 62. The lens 64 has a concave surface 66 facing outwardly and a plane surface 68 facing inwardly towards the prism 62. The curvature of the outer concave surface 66 is chosen in accordance with the required curvature of the mirror. When the mirror case 48 is in its dipped position, the reflection perceived by the user is from the surfaces at the air gap between the lens 64 and the prism 66. Any reflection from the concave surface 66 will be small, inverted and out of focus, and is therefore unlikely to be confusing.

If desired, the glass prism 62 and its reflective coating may be replaced by a plastics prism and a plane reflective layer on a glass substrate.

Figures 8 and 9 illustrate an exterior rear view mirror having a mirror case 70 mounted on a base member 72 suitable for attachment to the door of a motor car. A plane mirror 74 (consisting of a reflective layer on a glass substrate) is mounted within the mirror case 70, either directly on the case 70 (as illustrated) or alternatively on means (not shown) for adjusting its orientation relative to the mirror case 10. In accordance with the invention, a plano-concave plastics lens 76 is mounted in front of the bottom part of the mirror 74 with its plane surface abutting the mirror 74 and its concave surface facing outwardly. The combination of the bottom part of the mirror 74 and lens 76 simulates a curved mirror giving a wider field of view than that provided by the exposed upper part of the mirror 74 and thus rendering visible overtaking vehicles which would be outside the field of view of the exposed upper part of the mirror 74. The lens 76 may be tinted so as to provide a clear contrast between the image viewed therethrough and the image produced by the upper part of the mirror 74.

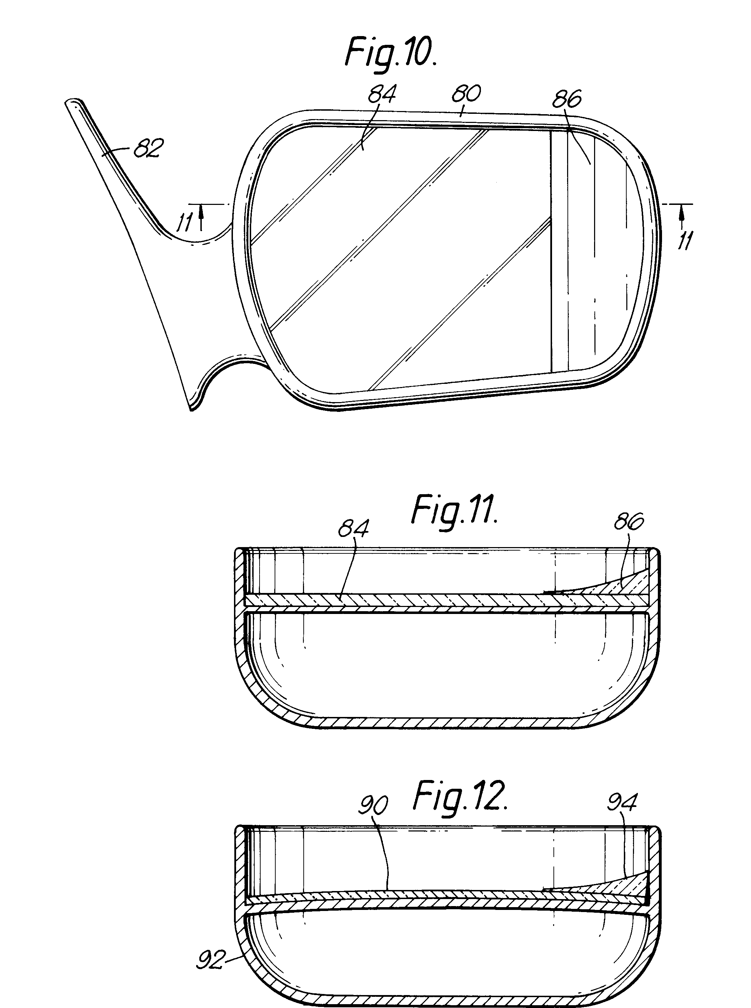

Figures 10 and 11 illustrate a modification of the mirror in Figures 8 and 9. An exterior rear view mirror has a mirror case 80 mounted on a base member 82 suitable for attachment to the door of a motor car. A plane mirror 84, consisting of a reflective layer on a glass substrate, is mounted within the mirror case 80. A plastics plano-concave lens 86 is mounted in front of the outer edge region of the mirror 84 with its plane surface abutting the mirror 84 and its concave surface facing outwardly. The combination of the outer part of the mirror 84 and the lens 86 simulates a curved mirror giving a wider field of view than that provided by the exposed inner part of the mirror 84, thus rendering visible overtaking vehicles which would be outside the field of view of the exposed inner part of the mirror 84.

Figure 12 illustrates a modification of the embodiment shown in Figure 11, in which the plane mirror 84 is replaced by a convex mirror 90 mounted in a mirror case 92. A plano-concave lens 94 is attached to the outer edge region of the mirror 90 so as to increase the perceived curvature this outer part of the mirror 90.

## Claims

1. A mirror unit comprising a mirror (10, 20, 60, 74, 84, 90), consisting of a reflective layer on a glass substrate, and a refractive element (16, 18, 20, 32, 64, 76, 86, 94) positioned in front of at least part of the plane mirror (10, 20, 60, 74, 84, 90) so that light incident on the refractive element (16, 18, 20, 32, 64, 76, 86, 94) from the opposite side to the plane mirror (10, 20, 60, 74, 84, 90) passes through refractive element (16, 18, 20, 32, 64, 76, 86, 94) and is reflected by the mirror (10, 20, 60, 74, 84, 90) back through the refractive element (16, 18, 20, 32, 64, 76, 86, 94), characterised in that the refractive element (16, 18, 20, 32, 64, 76, 86, 94) is formed from a mouldable transparent plastics material.

2. A mirror unit according to claim 1, wherein the reflective layer of the mirror (10, 20, 60, 74, 84) is on a plane surface of the glass substrate.

3. A mirror unit according to claim 1 or 2, wherein the refractive element is a lens (16, 18, 20, 32, 64, 76, 86, 94).

4. A mirror unit according to claim 3, wherein the lens is a concave lens (16, 18, 20, 32, 64, 76, 86, 94).

5. A mirror unit according to claim 3 or 4, wherein the lens (32) is of non-uniform curvature.

6. A mirror unit according to claim 3, 4 or 5, wherein the lens (16, 18, 20, 32, 64) covers substantially the whole of the surface of the plane mirror (10, 20, 60).

7. A mirror unit according to claim 3, 4 or 5, wherein the lens (76, 86, 94) covers less than half of the surface of the plane mirror (74, 84, 90).

8. A mirror unit according to claim 1 or 2, wherein the refractive element is a prism.

9. A mirror unit according to any preceding claim, wherein an electro-chromicelement (12) is located between the refractive element (16, 18, 20) and the first surface of the plane mirror (10).

Fig.1.

Fig.2.

Fig.3.

Fig.4.

Fig.5.

Fig.6.

*Fig.7.*

*Fig.9.*

*Fig. 8.*

*Fig.10.*

*Fig.11.*

*Fig.12.*

European Patent Office

## EUROPEAN SEARCH REPORT

Application Number

EP 92 30 0038

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 861 785 (BARBOUR)<br>* claims 1-4; figures 1,2 * | 1-6,8 | B60R1/08<br>G02B5/10 |
| Y | PATENT ABSTRACTS OF JAPAN<br>vol. 11, no. 56 (P-549)20 February 1987<br>& JP-A-61 221 701 ( SUMITOMO BAKELITE ) 2<br>October 1986<br>* abstract * | 1-6,8 | |
| A | US-A-4 187 001 (REDWITZ ET AL.)<br>* column 1, line 54 - column 2, line 2; figures 1,4 * | 2-6 | |
| A | EP-A-0 292 223 (BRITAX WINGARD)<br>* column 4, line 54 - column 5, line 17; figure 7 * | 1,6,9 | |
| A | US-A-4 182 552 (FEINBLOOM)<br>* figures 2,3 * | 7,8 | |
| | | | TECHNICAL FIELDS SEARCHED (Int. Cl.5) |
| | | | B60R<br>G02B<br>B29D |

The present search report has been drawn up for all claims

| Place of search | Date of completion of the search | Examiner |
|---|---|---|
| BERLIN | 12 MARCH 1992 | VONMOERS F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)